# EUROPEAN PATENT APPLICATION

(11) **EP 3 522 671 A1**
(43) Date of publication of application: **07.08.2019**
(21) Application number: 17855306.1
(22) Date of filing: 21.06.2017
(51) Int. Cl.: H04W 76/20

(54) **BASE STATION DEVICE, TERMINAL DEVICE, CONTROL METHOD, AND PROGRAM**

(30) Priority: 28.09.2016 JP 2016189442
(71) Applicant: KDDI Corporation, Tokyo 163-8003 (JP)
(72) Inventor: PENG, Hailan, Fujimino-shi Saitama 356-8502 (JP); HASHIMOTO, Noriyuki, Fujimino-shi Saitama 356-8502 (JP); MORIWAKI, Kazuya, Fujimino-shi Saitama 356-8502 (JP); SUEGARA, yasuhiro, Fujimino-shi Saitama 356-8502 (JP)
(74) Representative: Pitchford, James Edward
(86) International application number: PCT/JP2017/022778
(87) International publication number: WO 2018/061347

(57) **Abstract**

A base station device makes notification of information regarding a period in which a terminal device is to attempt to establish a radio link in a first frequency band in the event of occurrence of a radio link failure (RLF) in a radio link that is established in the first frequency band at the terminal device. Upon occurrence of the RLF in the radio link in the first frequency band, the terminal device attempts to reestablish a radio link in the first frequency band, and when the period has elapsed without succeeding in the reestablishment, the terminal device attempts to establish a radio link in a second frequency band that is lower in frequency than the first frequency band.

## Description

### TECHNICAL FIELD

The present invention relates to a base station device, a terminal device, a control method, and a program, and specifically relates to a connection control technique in radio communication.

### BACKGROUND ART

A novel radio access technique of the fifth generation (hereinafter referred to as "5G") has been considered in the Third Generation Partnership Project (see Non-Patent Literature 1). In a 5G system, it is assumed that a base station device that is also called NR gNB forms a large number of beams through beamforming and establishes a connection with a terminal device by using at least one of the beams. On the other hand, in the 5G system, it is possible to use a radio wave in a frequency band that is higher in frequency than conventionally used frequency bands. Through the use of the high frequency band, it is possible to, for example, obtain a wide signal frequency bandwidth and perform large capacity communication, but it is not easy to provide wide coverage, and therefore the high frequency band may be used in order to provide a high-speed communication service in a local area such as an urban area. That is, the radio wave in the high frequency band is largely affected by obstacles or the like, and therefore the state of the radio wave may drastically deteriorate between the base station device and the terminal device. In contrast, through the use of a low frequency band, it is relatively easy to provide wide coverage though the signal frequency bandwidth that can be obtained is not wide, and therefore the low frequency band may be used in order to provide a communication service that is seamless in a plane.

### CITATION LIST

### NON-PATENT LITERATURE

Non-Patent Literature 1: 3GPP contribution, R2-164306, May 2016

### SUMMARY OF INVENTION

### TECHNICAL PROBLEM

Conventionally, when a radio link failure (RLF) has occurred as a result of the terminal device being out of the coverage of the base station device while communicating with the base station device in a first frequency band, the terminal device switches to a connection in a second frequency band rather than trying to maintain communication in the first frequency band. However, when such switching is performed from a high frequency band to a low frequency band, it may not be possible to achieve a communication speed that is required by the terminal device in the low frequency band and the throughput of the system as a whole may decrease.

### SOLUTION TO PROBLEM

The present invention makes it possible to maintain a connection between a terminal device and a base station device while improving the throughput of a radio communication system.

A base station device according to an aspect of the present invention includes notifying means for making notification of information regarding a period in which a terminal device is to attempt to establish a radio link in a first frequency band in the event of occurrence of a radio link failure (RLF) in a radio link that is established in the first frequency band at the terminal device, wherein, upon occurrence of the RLF in the radio link in the first frequency band, the terminal device attempts to reestablish a radio link in the first frequency band, and when the period has elapsed without succeeding in the reestablishment, the terminal device attempts to establish a radio link in a second frequency band that is lower in frequency than the first frequency band.

A terminal device according to an aspect of the present invention includes: receiving means for receiving, from a base station device, information regarding a period in which the terminal device is to attempt to reestablish a radio link in a first frequency band in the event of occurrence of a radio link failure (RLF) in a radio link that is established in the first frequency band at the terminal device; and attempting means for attempting, upon occurrence of the RLF in the radio link in the first frequency band, to reestablish a radio link in the first frequency band, and when the period has elapsed without succeeding in the reestablishment, attempting to establish a radio link in a second frequency band that is lower in frequency than the first frequency band.

### ADVANTAGEOUS EFFECTS OF INVENTION

According to the present invention, it is possible to maintain a connection between a terminal device and a base station device while improving the throughput of a radio communication system.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings are included in the description, constitute a part of the description, illustrate embodiments of the present invention, and are used for explaining the principle of the present invention in conjunction with the description of the embodiments.
FIG. 1 is a diagram illustrating an example of a configuration of a radio communication system.
FIG. 2 is a diagram illustrating an example of hardware configurations of a base station device and a terminal device.
FIG. 3 is a diagram illustrating an example of a functional configuration of the base station device.
FIG. 4 is a diagram illustrating an example of a functional configuration of the terminal device.
FIG. 5 is a diagram illustrating a first example of the flow of processing executed by the radio communication system.
FIG. 6 is a diagram illustrating a second example of the flow of processing executed by the radio communication system.

### DESCRIPTION OF EMBODIMENTS

The following describes an embodiment of the present invention with reference to the drawings.

### (Configuration of Radio Communication System)

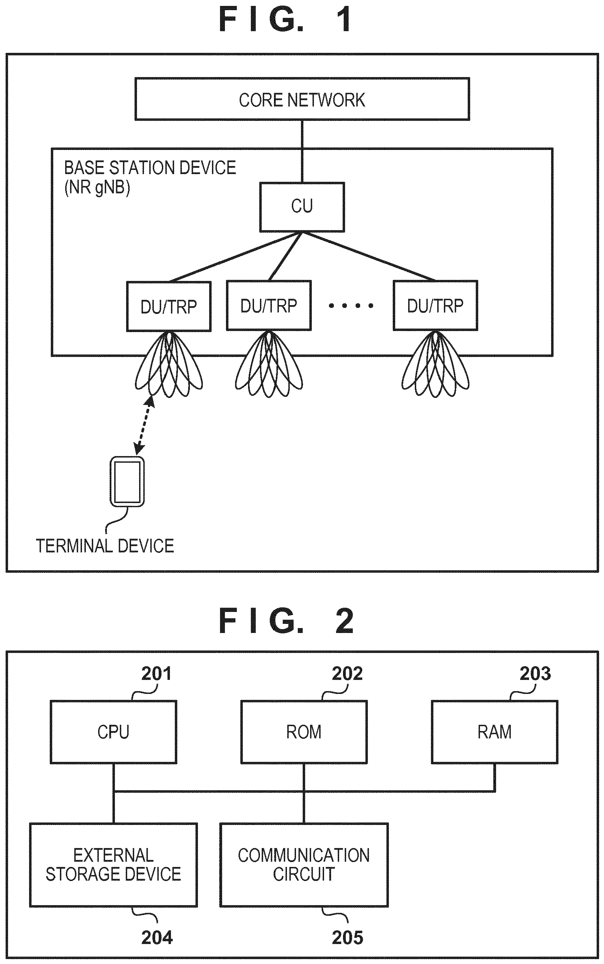

FIG. 1 illustrates an example of a configuration of a radio communication system according to the present embodiment. The radio communication system according to the present embodiment is, for example, a mobile radio communication system of the fifth generation (5G) and includes a base station device (NR gNB) and a terminal device. A radio connection is established between the base station device and the terminal device and a radio signal is transmitted and received therebetween. The base station device is connected to a core network by, for example, a wire (in some cases, a line that includes a radio section) and is connected to other base station devices (not illustrated) via the core network. Note that the core network is connected to an external network such as the Internet via, for example, a gateway, and the base station device can be connected to the external network via the core network.

The base station device of the present embodiment includes, as internal units, a first part that controls lower layers in communication and a second part that controls upper layers. In FIG. 1, the first part is denoted with DU (distributed unit)/TRP (transmission receiver point) and the second part is denoted with CU (central unit). In the following description, the first part is referred to as a DU and the second part is referred to as a CU. The DU of the present embodiment is configured to control at least a physical (PHY) layer and not to control at least a radio resource control (RRC) layer and layers higher than the RRC layer. On the other hand, the CU is configured to control layers that are higher than the DU and that include the RRC layer. Although a single DU may be connected to the CU, a plurality of DUs can be connected to the CU as illustrated in FIG. 1. Note that a line that connects the CU and the DU is called a fronthaul line. The CU and the DU may be directly connected as illustrated in FIG. 1, or a switch (not illustrated) that is connected to a plurality of DUs may be connected to the CU and communication between the CU and each DU may be performed based on control of the switch. When a switch is used, communication between DUs can be performed without involving the CU.

The DU is capable of forming a plurality of beams through beamforming. As a result of a large number of DUs forming a plurality of beams as illustrated in FIG. 1, the number of beams that can be formed by the base station device increases, and therefore a large number of users can be accommodated and a total throughput of the system as a whole can be increased. As described above, in a 5G system, it is possible to use a radio wave in a frequency band that is higher in frequency than conventionally used frequency bands, and the radio wave in such a high frequency band is largely affected by obstacles or the like, and therefore the state of the radio wave may drastically deteriorate between the base station device and the terminal device. Accordingly, even when a radio link is established between the terminal device and the base station device by using a beam, the state of a radio wave may drastically deteriorate as a result of, for example, movement of the terminal device, and a radio link failure (RLF) may occur. Here, it is general in the lower frequency band that the state of a radio wave is relatively stable and wide coverage is provided. Therefore, in the event of the occurrence of an RLF in the high frequency, the terminal device can maintain the connection by attempting to establish a radio link in the low frequency band. Meanwhile, a large number of beams are formed in the 5G system, and therefore even if an RLF occurs in a beam, there are cases where the probability that the connection can be maintained by using another beam is high. Also, radio quality can be drastically improved, as well as drastically deteriorate, in the high frequency band.

Therefore, upon an RLF occurring in the radio link established in the high frequency band, the terminal device according to the present embodiment attempts to reestablish a radio link in the high frequency band rather than immediately attempting to establish a radio link in the low frequency band. Then, for example, after a predetermined period has elapsed, the terminal device attempts to establish a radio link in the low frequency band. Thus, the terminal device maintains the connection in the high frequency band as long as possible, and when the connection cannot be maintained, attempts to establish a connection in the low frequency band. Therefore, it is possible to maintain the connection while improving the throughput.

Note that the base station device according to the present embodiment notifies the terminal device of information regarding a period in which the terminal device is to attempt to reestablish a radio link in the high frequency band in the event of occurrence of an RLF in the radio link that is established in the high frequency band by the terminal device. The information to be notified here is, for example, information that specifies a timer value. In this case, the terminal device attempts to establish a radio link in the low frequency band when a period of time from the occurrence of the RLF reaches the timer value without succeeding in the attempt to reestablish a radio link in the high frequency band. Alternatively, the information to be notified may be information that specifies the number of attempts to reestablish a radio link in the high frequency band. In this case, the terminal device attempts to establish a radio link in the low frequency band when the terminal device does not succeed in reestablishing a radio link in the high frequency band despite the terminal device having made the specified number of attempts for the reestablishment. That is, the above-described predetermined period is a period that is determined by either the timer value or the number of attempts for the reestablishment notified by the base station device.

Note that the predetermined period (the timer value or the number of attempts) can be determined based on a property of a beam that is formed by the base station device to which the terminal device is connected by establishing the radio link in the high frequency band. The predetermined period can be determined such that, for example, the predetermined period is long when the width of the beam is wide, and the predetermined period is short when the width of the beam is narrow. When the width of the beam is wide, in the case of, for example, an omnidirectional antenna, the gain is ideally constant regardless of direction and a place that is far from the base station device is not included in the coverage. Accordingly, the terminal device connected with the beam is considered to be located at a position that is not far from the base station device. Such a terminal device located at a position not far from the base station device is considered to be highly likely to succeed in reestablishing a radio link when the terminal device attempts the reestablishment. Therefore, by setting a long period for attempting the reestablishment, it is possible to increase the probability that the terminal device can continue communication in the high frequency band by reestablishing a radio link in the high frequency band. On the other hand, when the width of the beam is narrow, the antenna gain is high in a specific direction and even a position that is far from the base station device can be included in the coverage. Accordingly, the terminal device may be located at a position far from the base station device and even when the terminal device attempts to reestablish a radio link, the probability that the terminal device will not succeed in the reestablishment may be high. Therefore, by setting a short period for attempting the reestablishment, it is possible to cause the terminal device to attempt to establish a connection in the low frequency band when the terminal device cannot reestablish a radio link in the high frequency band.

Alternatively, the predetermined period may be determined such that, for example, the predetermined period is short when the width of the beam is wide, and the predetermined period is long when the width of the beam is narrow. That is, when the terminal device is connected with a beam that has a wide width, the terminal device is considered to be located at a position not far from the base station device as described above, and in such a case, it is expected that the terminal device will succeed in reestablishing a radio link in a short period of time. In contrast, when the terminal device is connected with a beam that has a wide width, the terminal device may be located at a position far from the base station device as described above, and therefore it may take a long time for the terminal device to succeed in reestablishing a radio link by entering the range of a beam. Therefore, by setting the predetermined period as described above, it is possible to increase the probability that a radio link will be reestablished in the high frequency band.

Whether the width of the beam is wide or narrow can be determined based on, for example, a 3dB beam width that is determined by a difference between a direction in which a peak value of the antenna gain is obtained and a direction in which the antenna gain is half of the peak value. That is, when the 3dB beam width is narrower than a predetermined width, the predetermined period is set as the above-described case where the width of the beam is narrow, and when the 3dB beam width is wider than the predetermined width, the predetermined period is set as the above-described case where the width of the beam is wide. Note that the predetermined period may be determined stepwise according to the 3dB beam width.

When the predetermined period has elapsed without succeeding in reestablishment of a radio link in the high frequency band and the terminal device established a radio link in the low frequency band, the terminal device can make notification of the occurrence of the RLF in the radio link in the high frequency band. For example, when a base station device that provides a service in the low frequency band differs from a base station device that provides a service in the high frequency band, the base station device of the low frequency band can request the base station device of the high frequency band to transfer data that is to be transmitted to the terminal device, based on the notification. As a result of the request, the base station device of the low frequency band can acquire the data, which was to be transmitted by the base station device of the high frequency band, and transmit the data to the terminal device.

Although a relationship between the high frequency band and the low frequency band has been described, this relationship should not be taken as a limitation. That is, the relationship between the high frequency band and the low frequency band may be opposite to that described above. Therefore, in the following description, a frequency band that corresponds to the above-described high frequency band will be referred to as a first frequency band, and a frequency band that corresponds to the above-described low frequency band will be described as a second frequency band, regardless of the frequency.

The following describes configurations of the base station device and the terminal device that perform processing as described above and the flow of the processing.

### (Hardware Configuration)

FIG. 2 illustrates an example of hardware configurations of the base station device and the terminal device. In an example, the base station device and the terminal device have the hardware configuration as illustrated in FIG. 2, and includes, for example, a CPU 201, a ROM 202, a RAM 203, an external storage device 204, and a communication circuit 205. In the base station device and the terminal device, the CPU 201 executes programs that realize functions of the base station device and the terminal device as described above, the programs being stored in, for example, any of the ROM 202, the RAM 203, and the external storage device 204.

The base station device and the terminal device communicate with another device through the communication circuit 205 that is controlled by the CPU 201, for example. Note that the communication circuit 205 of the base station device can communicate with another base station device via a wired circuit, for example. The communication circuit 205 of the base station device can also perform radio communication with the terminal device by forming one or more (a plurality of) beams. The communication circuit 205 of the terminal device is configured such that it can connect with at least one of the beams formed by the communication circuit 205 of the base station device, and can perform radio communication with the base station device by using the beam. Although the configuration of the base station device and the terminal device schematically illustrated in FIG. 2 includes a single communication circuit 205, this configuration should not be taken as a limitation, and each of the base station device and the terminal device may include a plurality of communication circuits. For example, the base station device includes a first communication circuit for communication with the core network and a second communication circuit for radio communication with the terminal device. The terminal device may include, for example, a first communication circuit in accordance with radio communication standards of the fourth or earlier generation and a second communication circuit in accordance with radio communication standards of the fifth generation. The terminal device may include, for example, a radio communication circuit in accordance with standards of a network such as a wireless LAN other than a cellular network, and may further include, for example, a wired communication circuit that is used for a wired connection such as a USB connection.

Note that the base station device and the terminal device may include dedicated hardware that performs respective functions, or some functions may be performed by hardware and other functions may be performed by a computer that executes programs. Alternatively, all functions may be performed by the computer and programs.

### (Functional Configuration)

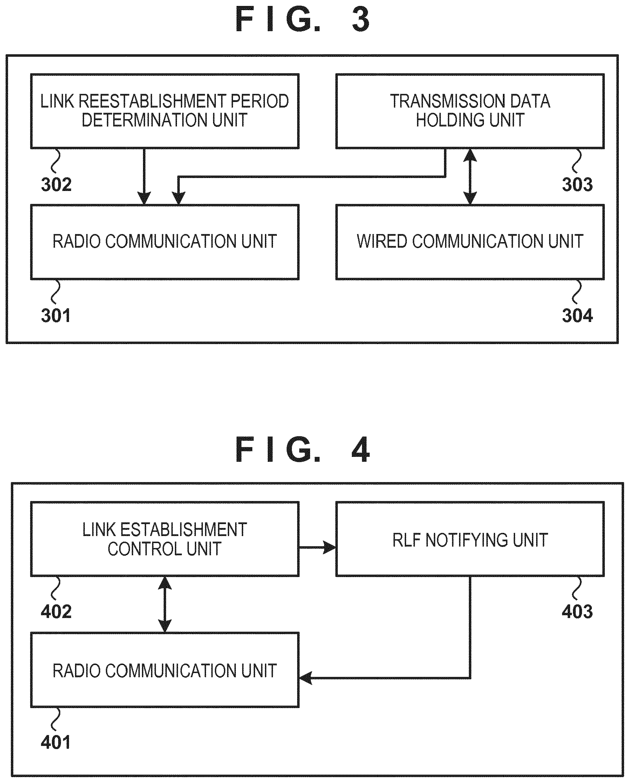

First, an example of a functional configuration of the base station device will be described with reference to FIG. 3. The base station device includes, for example, a radio communication unit 301, a link reestablishment period determination unit 302, a transmission data holding unit 303, and a wired communication unit 304. Although the base station device can have other functions of a general base station device, those functions are not illustrated in the drawings for simplification of the description.

The radio communication unit 301 is capable of forming one or more beams in at least either the first frequency band or the second frequency band, or in another frequency band by, for example, controlling a non-illustrated antenna, and communicates with the terminal device by using at least one of the beams. Note that the radio communication unit 301 generates a baseband signal from, for example, to-be-transmitted data that is held by the transmission data holding unit 303 or information that is generated by the link reestablishment period determination unit 302. The radio communication unit 301 is capable of converting the baseband signal to a signal of a radio frequency and outputting the signal as a radio signal from the antenna. Also, the radio communication unit 301 is capable of converting a radio signal that is received by the antenna to a baseband signal and obtaining information from the baseband signal.

The link reestablishment period determination unit 302 determines a period in which the terminal device is to attempt to establish a radio link in the first frequency band in the event of occurrence of a radio link failure (RLF) in a radio link that is established in the first frequency band by the terminal device, as described above. Note that the "period" referred to herein may be expressed by a timer value or the number of attempts to reestablish a radio link as described above, or expressed according to any other standard. That is, any indicator that sets a specific period for the attempt to reestablish a radio link is determined as the "period" referred to herein. Note that the link reestablishment period determination unit 302 may vary this period, for example, according to properties such as the width of the beam with which the terminal device is connected, as described above. Alternatively, the link reestablishment period determination unit 302 may determine different periods for respective terminal devices. For example, the link reestablishment period determination unit 302 can determine the period according to performance of the terminal device regarding radio communication. For example, the link reestablishment period determination unit 302 can determine the period such that the period is long when the probability that the reestablishment of a radio link will succeed is increased due to the performance of the terminal device, and the period is short when the probability is not increased due to the performance of the terminal device. Alternatively, the period may be determined in a way opposite to the above. Alternatively, the link reestablishment period determination unit 302 may determine the period each time based on, for example, the number of terminal devices that are connected to the base station device in the first frequency band or the number of terminal devices that are located in the surrounding region. For example, when a large number of terminal devices are connected to the base station device in the first frequency band, it is highly likely that another terminal device has already established a radio link for communication by using a beam that is a target of the attempt to reestablish a radio link, and therefore a short period may be set to urge the terminal device to transition to the second frequency band. As described above, the link reestablishment period determination unit 302 can determine the above-described period by using various measures. Note that when a uniform period that does not change is applied to all terminal devices, the link reestablishment period determination unit 302 may merely notify the terminal device of that period without determining the period.

The link reestablishment period determination unit 302 notifies the terminal device of information regarding the determined period through the radio communication unit 301. Note that the link reestablishment period determination unit 302 can make this notification, for example, when a radio resource control (RRC) connection with the terminal device is established in the first frequency band. Alternatively, the link reestablishment period determination unit 302 may make the notification by using a broadcast signal, for example, irrespective of before or after establishment of the RRC connection in the first or second frequency band. Note that the broadcast signal is, for example, a Master Information Block (MIB) or a System Information Block (SIB).

The transmission data holding unit 303 holds data that is to be transmitted to the terminal device. The wired communication unit 304 performs wired communication with a node in the core network or another base station device. The transmission data holding unit 303 holds to-be-transmitted data by, for example, acquiring the data from the core network through the wired communication unit 304, and the radio communication unit 301 transmits the held data to the terminal device. When the wired communication unit 304 is requested by another base station device to transfer the to-be-transmitted data, which is to be transmitted to the terminal device, the wired communication unit 304 transfers the data held by the transmission data holding unit 303 to the other base station device. Note that the radio communication unit 301 may be capable of performing radio communication in both the first frequency band and the second frequency band, and the terminal device may establish a radio link with the radio communication unit 301 in the second frequency band after the occurrence of RLF in the first frequency band. In such a case, there is no need to transfer the to-be-transmitted data, and therefore the radio communication unit 301 transmits the data held by the transmission data holding unit 303 in the second frequency band after establishment of the radio link in the second frequency band.

Next, an example of a functional configuration of the terminal device will be described with reference to FIG. 4. In an example, the terminal device includes a radio communication unit 401, a link establishment control unit 402, and an RLF notifying unit 403. Note that, although the terminal device can include various other functional units of a general communication terminal or a general electronic equipment that has a communication function, those functions are not illustrated in the drawings for simplification of the description.

The radio communication unit 401 is configured such that it can connect with at least one of a plurality of beams that are formed by one or more base station devices by controlling a non-illustrated antenna. The radio communication unit 401 is capable of generating a baseband signal from, for example, to-be-transmitted data or information that is generated by the RLF notifying unit 403, converting the baseband signal to a signal of a radio frequency, and outputting the signal as a radio signal from the antenna. Also, the radio communication unit 401 is capable of converting a radio signal that is received by the antenna to a baseband signal, and obtaining information from the baseband signal.

The link establishment control unit 402 establishes a radio link with the base station device in the first frequency band or the second frequency band by controlling the radio communication unit 401. When the radio communication unit 401 receives information regarding the period from the base station device, the link establishment control unit 402 attempts to establish a radio link based on the information regarding the period. That is, upon the occurrence of a radio link failure (RLF) in a radio link that is established in the first frequency band by the terminal device, the link establishment control unit 402 attempts to reestablish a radio link in the first frequency band during the period. When the period corresponding to the received information has elapsed without succeeding in the reestablishment of a radio link in the first frequency band, the link establishment control unit 402 attempts to establish a radio link in the second frequency band. After establishing a radio link in the second frequency band, the link establishment control unit 402 notifies the RLF notifying unit 403 of the establishment of the radio link in the second frequency band.

Upon receiving the notification of the establishment of the radio link in the second frequency band, the RLF notifying unit 403 controls the radio communication unit 401 to give notification of the occurrence of the RLF in the first frequency band to a base station device that is connected with the radio link in the second frequency band. Upon receiving the notification, the base station device connected with the radio link in the second frequency band requests the base station device that was connected with the radio link in the first frequency band to transfer to-be-transmitted data that is to be transmitted to the terminal device. Note that the above does not apply when the base station device connected with the radio link in the second frequency band is the same as the base station device connected with the radio link in the first frequency band. This is because, when the terminal device switches the radio link from the first frequency band to the second frequency band with the same base station device, the base station device can transmit the data to the terminal device by acquiring the data from the same transmission data holding unit 303, and therefore there is no need to transfer the data.

### (Flow of Processing)

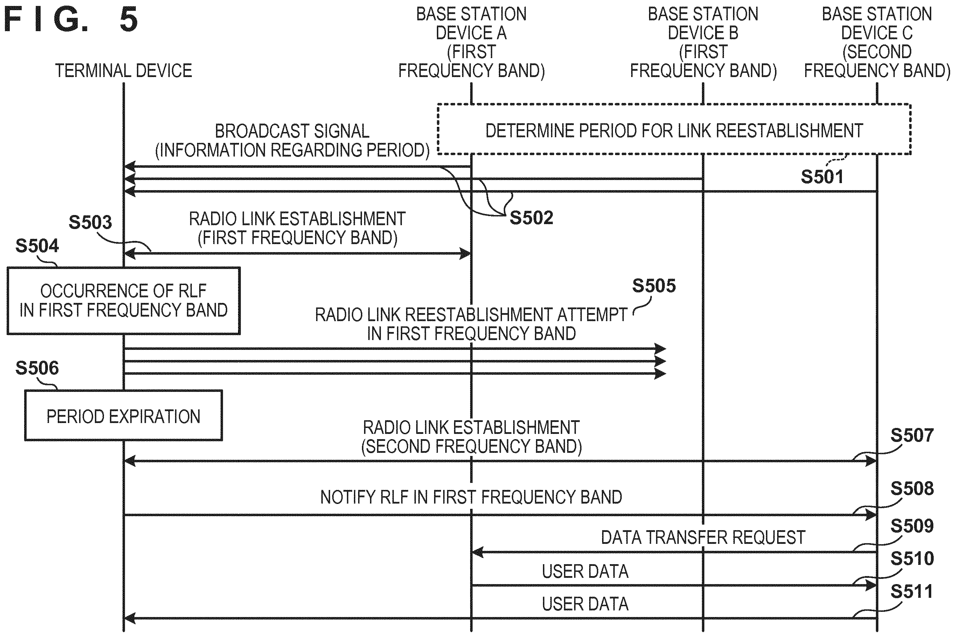

The following describes the flow of processing that is executed by the base station device and the terminal device as described above. FIG. 5 is a sequence diagram illustrating an example of the flow of processing executed by the radio communication system according to the present embodiment. The following describes processing in a radio communication system that includes two base station devices (base station devices A and B) that provide a radio communication service in the first frequency band, a base station device (base station device C) that provides a radio communication service in the second frequency band, and a terminal device. However, this is merely an example, and the two base station devices that provide the radio communication service in the first frequency band may be replaced with, for example, a base station device that is capable of providing two different beams. In the example of processing described below, upon the occurrence of an RLF in a radio link that is established in the first frequency band, the terminal device attempts to reestablish a radio link in the first frequency band by using a beam that is different from a beam used for the radio link in which the RLF occurred. However, this should not be taken as a limitation. That is, the terminal device may attempt to reestablish a radio link in the first frequency band by using the same beam as that used for the radio link in which the RLF occurred. Also, the base station device that provides the radio communication service in the first frequency band and the base station device that provides the radio communication service in the second frequency band may be constituted by a single device. In an example, the first frequency band is a high frequency band and the second frequency band is a low frequency band. However, this should not be taken as a limitation. For example, the first frequency band and the second frequency band may belong to the same frequency band, or the second frequency band may be higher in frequency than the first frequency band.

In this example of processing, first, the base station devices A to C determine a period in which the terminal device is to attempt to reestablish a radio link in the first frequency band in the event of occurrence of a radio link failure (RLF) in a radio link that is established in the first frequency band at the terminal device (S501). Note that this period may be determined in advance, in which case, processing in step S501 need not be executed. Also, it is not required that all of the base station devices determine the period as above, and this processing may be executed by only some of the base station devices. Thereafter, the base station devices A to C transmit information regarding the determined period by using broadcast signals (MIB or SIB) (S502). The terminal device receives any of the broadcast signals, and based on the notified information regarding the period, sets a period for attempting reestablishment of a radio link in the event of the occurrence of an RLF after establishment of a radio link in the first frequency band. It is assumed that thereafter the terminal device establishes a radio link with the base station device A in the first frequency band (S503). Note that, although in this example of processing, the terminal device establishes the radio link after acquiring the information regarding the period for attempting reestablishment of a radio link, the terminal device may acquire this information by receiving the broadcast signal after establishing the radio link.

It is assumed that, thereafter, as a result of, for example, movement of the terminal device, an RLF occurred in the radio link established between the terminal device and the base station device A in the first frequency band (S504). The terminal device then attempts to reestablish a radio link with, for example, the base station device B in the first frequency band (S505). Thereafter, when the terminal device does not succeed in reestablishing a radio link in the first frequency band, for example, by the time corresponding to a reported timer value, the terminal device determines that it has failed in reestablishing a radio link in the first frequency band (S506). Note that the terminal device may determine that it has failed in reestablishing a radio link in the first frequency band when, for example, the terminal device does not succeed in reestablishing a radio link despite the terminal device attempting to reestablish a radio link the number of times corresponding to the reported period.

Upon determining the failure of the reestablishment of a radio link in the first frequency band, the terminal device attempts to establish a radio link with the base station device C that provides the radio communication service in the second frequency band (S507). The terminal device requests a connection, to the base station device C, by using a random access channel, for example. The base station device C then transmits, for example, an RRC Connection Reconfiguration message that includes setting information for establishing a radio link in the second frequency band. As a result, a radio link is established between the base station device C and the terminal device in the second frequency band. At this time, the terminal device notifies the base station device C that an RLF occurred in the radio link established in the first frequency band (S508). Note that the terminal device may provide this notification by, for example, using the above-described random access channel, or transmitting an individual message after establishment of the radio link. This notification may include, for example, information that requests the base station device C to transmit user data that was to be transmitted to the terminal device by using the radio link established in the first frequency band. Upon receiving the notification of the occurrence of the RLF in the radio link in the first frequency band from the terminal device, the base station device C requests the base station device A, which was connected with the radio link in which the RLF occurred, to transfer the user data to be transmitted to the terminal device (S509). The base station device C then receives, from the base station device A, the user data to be transmitted to the terminal device (S510) and transmits the received user data to the terminal device (S511).

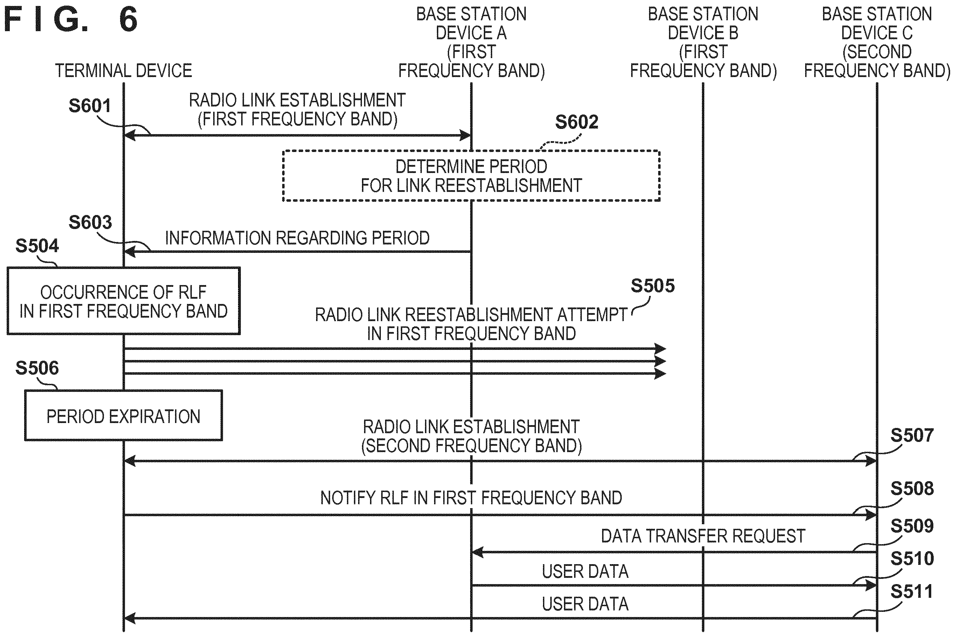

The above example has been described regarding a case where the broadcast signals transmitted from the base station devices are used for transmitting the information regarding the period in which the terminal device is to attempt to reestablish a radio link in the first frequency band in the event of occurrence of an RLF in a radio link in the first frequency band. However, the base station device may notify the terminal device of this information by individually transmitting a signal using a radio link after establishing the radio link. FIG. 6 illustrates processing in such a case. In the processing of FIG. 6, first, the terminal device establishes a radio link with the base station device A in the first frequency band (S601). Note that the terminal device establishes the radio link with the base station device A in the first frequency band when, for example, there arises a need for the terminal device to use the radio communication service while the terminal device is located within the coverage of a beam that is formed by the base station device A in the first frequency band. At this time, the base station device A determines a period in which the terminal device is to attempt to reestablish a radio link in the first frequency band in the event of occurrence of a radio link failure (RLF) in the radio link established by the terminal device in the first frequency band (S602). Note that this period may be determined in advance, in which case, processing in step S602 need not be executed. Also, in this example, the other base station devices (base station devices B and C) that are not connected to the terminal device need not determine this period. Thereafter, the base station device A notifies the terminal device of information regarding the period in which the terminal device is to attempt to reestablish a radio link in the first frequency band in the event of the occurrence of an RLF in the radio link established in the first frequency band (S603). The subsequent processing is similar to that illustrated in FIG. 5, and therefore illustrated by using similar reference numerals and a description thereof is omitted.

As described above, the base station device notifies the terminal device of information regarding a period in which the terminal device is to attempt to reestablish a radio link in the first frequency band, rather than immediately switching to the second frequency band, when an RLF occurs in a radio link established in the first frequency band. Therefore, it is possible to increase the probability that the terminal device can maintain and reestablish a radio link in the first frequency band when, for example, highly efficient/broadband/high-speed communication can be performed in the first frequency band, and the throughput of the radio communication system as a whole can be improved. Further, the terminal device attempts to establish a radio link in the second frequency band when a radio link cannot be reestablished in the first frequency band, and therefore communication can be maintained. Thus, according to the present embodiment, it is possible to maintain the connection between the terminal device and the base station device while improving the throughput of the radio communication system.

The present invention is not limited to the above embodiment and various changes and modifications can be made within the spirit and scope of the present invention. Therefore, to apprise the public of the scope of the present invention, the following claims are made.

This application claims priority from Japanese Patent Application No. 2016-189442 filed September 28, 2016, which is hereby incorporated by reference herein.

## Claims

1. A base station device comprising:
notifying means for making notification of information regarding a period in which a terminal device is to attempt to establish a radio link in a first frequency band in the event of occurrence of a radio link failure (RLF) in a radio link that is established in the first frequency band at the terminal device,
wherein, upon occurrence of the RLF in the radio link in the first frequency band, the terminal device attempts to reestablish a radio link in the first frequency band, and when the period has elapsed without succeeding in the reestablishment, the terminal device attempts to establish a radio link in a second frequency band that is lower in frequency than the first frequency band.

2. The base station device according to claim 1,
wherein the information regarding the period is information that specifies a timer value, and
the terminal device attempts to establish a radio link in the second frequency band when a period of time from the occurrence of the RLF in the radio link in the first frequency band reaches the timer value without succeeding in the attempt of the reestablishment.

3. The base station device according to claim 1,
wherein the information regarding the period is information that specifies a number of attempts to reestablish a radio link, and
the terminal device attempts to establish a radio link in the second frequency band when the terminal device does not succeed in the reestablishment despite the terminal device making the specified number of attempts for the reestablishment.

4. The base station device according to any one of claims 1 to 3, further comprising
determining means for determining the information regarding the period based on a property of a beam that is formed by a base station device connected to the terminal device and that is used for the radio link established by the terminal device in the first frequency band.

5. The base station device according to any one of claims 1 to 4,
wherein the notifying means notifies the terminal device of the information when a radio resource control (RRC) connection is established with the terminal device in the first frequency band.

6. A terminal device comprising:
receiving means for receiving, from a base station device, information regarding a period in which the terminal device is to attempt to reestablish a radio link in a first frequency band in the event of occurrence of a radio link failure (RLF) in a radio link that is established in the first frequency band at the terminal device; and
attempting means for attempting, upon occurrence of the RLF in the radio link in the first frequency band, to reestablish a radio link in the first frequency band, and when the period has elapsed without succeeding in the reestablishment, attempting to establish a radio link in a second frequency band that is lower in frequency than the first frequency band.

7. The terminal device according to claim 6,
wherein the information regarding the period is information that specifies a timer value, and
the attempting means attempts to establish a radio link in the second frequency band when a period of time from the occurrence of the RLF in the radio link in the first frequency band reaches the timer value without succeeding in the attempt of the reestablishment.

8. The terminal device according to claim 6,
wherein the information regarding the period is information that specifies a number of attempts to establish a radio link, and
the attempting means attempts to establish a radio link in the second frequency band when the terminal device does not succeed in the reestablishment despite the terminal device making the specified number of attempts for the reestablishment.

9. The terminal device according to any one of claims 6 to 8,
wherein the receiving means receives the information from the base station device when a radio resource control (RRC) connection is established with the base station device in the first frequency band.

10. The terminal device according to any one of claims 6 to 9, further comprising
notifying means for notifying the occurrence of the RLF in the first frequency band to a base station device that is connected to the terminal device in the second frequency band when the period has elapsed without succeeding in the reestablishment and a radio link is established in the second frequency band.

11. A method for controlling a base station device, comprising:
making notification of information regarding a period in which a terminal device is to attempt to establish a radio link in a first frequency band in the event of occurrence of a radio link failure (RLF) in a radio link that is established in the first frequency band at the terminal device,
wherein, upon occurrence of the RLF in the radio link in the first frequency band, the terminal device attempts to reestablish a radio link in the first frequency band, and when the period has elapsed without succeeding in the reestablishment, the terminal device attempts to establish a radio link in a second frequency band that is lower in frequency than the first frequency band.

12. A method for controlling a terminal device, comprising:
receiving, from a base station device, information regarding a period in which the terminal device is to attempt to reestablish a radio link in a first frequency band in the event of occurrence of a radio link failure (RLF) in a radio link that is established in the first frequency band at the terminal device; and
upon occurrence of the RLF in the radio link in the first frequency band, attempting to reestablish a radio link in the first frequency band, and when the period has elapsed without succeeding in the reestablishment, attempting to establish a radio link in a second frequency band that is lower in frequency than the first frequency band.

13. A program that causes a computer included in a base station device to make notification of information regarding a period in which a terminal device is to attempt to establish a radio link in a first frequency band in the event of occurrence of a radio link failure (RLF) in a radio link that is established in the first frequency band at the terminal device,
wherein, upon occurrence of the RLF in the radio link in the first frequency band, the terminal device attempts to reestablish a radio link in the first frequency band, and when the period has elapsed without succeeding in the reestablishment, the terminal device attempts to establish a radio link in a second frequency band that is lower in frequency than the first frequency band.

14. A program that causes a computer included in a terminal device to:
receive, from a base station device, information regarding a period in which the terminal device is to attempt to reestablish a radio link in a first frequency band in the event of occurrence of a radio link failure (RLF) in a radio link that is established in the first frequency band at the terminal device; and
upon occurrence of the RLF in the radio link in the first frequency band, attempt to reestablish a radio link in the first frequency band, and when the period has elapsed without succeeding in the reestablishment, attempt to establish a radio link in a second frequency band that is lower in frequency than the first frequency band.
